Europäisches Patentamt

European Patent Office

Office européen des brevets

(19)

(11) Publication number: **0 033 946**
**B1**

# (12) EUROPEAN PATENT SPECIFICATION

(45) Date of publication of patent specification: **31.07.85**

(21) Application number: **81100781.4**

(22) Date of filing: **04.02.81**

(51) Int. Cl.⁴: **G 02 B 23/12,** G 02 B 23/00

(54) Binocular night telescope.

(30) Priority: **07.02.80 SE 8000985**

(43) Date of publication of application:
**19.08.81 Bulletin 81/33**

(45) Publication of the grant of the patent:
**31.07.85 Bulletin 85/31**

(84) Designated Contracting States:
**CH DE FR GB LI NL SE**

(56) References cited:
**DE-A-3 025 408**
**DE-U-7 209 150**
**US-A-2 963 942**
**US-A-3 454 773**

(73) Proprietor: **Aktiebolaget Bofors**
**S-691 80 Bofors (SE)**

(72) Inventor: **Vogl, Georg**
**Branta Stigen 20**
**S-133 00 Saltsjöbaden (SE)**
Inventor: **Möller, Bo**
**Bromma Kyrkväg 457**
**S-161 52 Bromma (SE)**
Inventor: **Söderlindh, Michel**
**Odengatan 25**
**S-113 51 Stockholm (SE)**

(74) Representative: **Moll, Walter, Dipl.-Phys., Dr.**
**et al**
**Patentanwälte Glawe, Delfs, Moll & Partner**
**Liebherrstrasse 20 Postfach 162**
**D-8000 München 26 (DE)**

Courier Press, Leamington Spa, England.

## Description

The invention relates to a binocular night telescope comprising a large aperture objective, a light amplifier tube and a viewing microscope comprising a common collimating objective for focusing the amplified image at infinity, telescope objectives and oculars and reflecting means for inverting the image to be viewed.

For the observation of military targets it is common to use binocular instruments. A binocular telescope makes it easier to detect small or hidden targets and it also makes it less tiring for the eyes of the observer. For use at night such a telescope is provided with a light amplifier tube for amplifying the image of the target which is projected by the large aperture objective. For allowing observation of the screen of the tube with both eyes, it is previously known to use special magnifying glasses. Such magnifying glasses, however, are often big and complicated and they also given an insufficient magnification.

From US—A—3 454 733 there has been known a binocular night telescope of the aforementioned type, in which a collimating objective is arranged behind and coaxial to the light amplifier tube. Two prism telescopes for viewing the image collimated by the collimating objective are arranged behind and partly at the sides of said collimating objective. This arrangement results in a considerable length of the whole instrument, the centre of gravity not coinciding with that part of the instrument where the user will hold it in his hands.

It is an object of the invention to provide a binocular night telescope of the aforementioned type having an improved arrangement of the optical elements for obtaining a shorter length of the instrument and a more advantageous location of its centre of gravity.

According to the invention this is achieved by arranging the optical elements in the following order with respect to the direction of light: image erecting means, collimating objective, means for reversing the image left to right — the telescope objectives being arranged before and/or behind the reversing means — so that at least part of the reversing means are located below or above the light amplifier tube.

According to a preferred embodiment of the invention the telescope objectives and the oculars of the viewing microscope are so designed that the exit pupil has a diameter of at least seven millimetres, preferably 7—12 millimetres. Such an exit pupil size means that the instrument is suitable for all kinds of eyes distances without any need for adjusting the distance between the oculars in the microscope. Then no rombic prisms for adjusting the eyes distance are required.

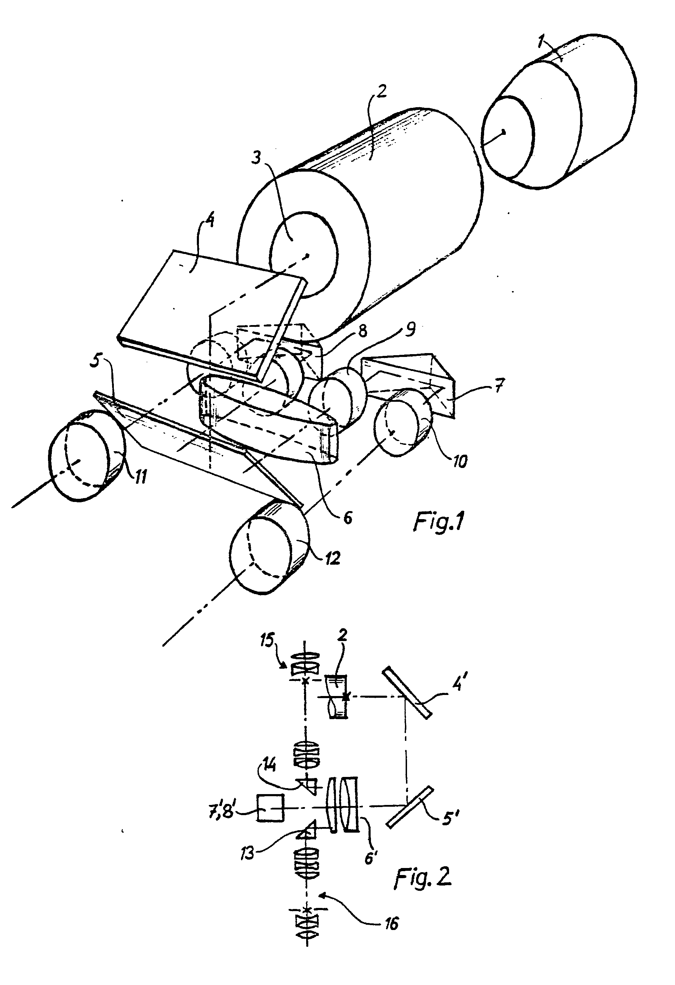

In the following the invention will be described more in detail with reference to the accompanying drawings, in which figure 1 schematically illustrates one embodiment of a telescope according to the invention and figure 2 another embodiment with additional observation channels. The instrument shown in figure 1 comprises a very large aperture objective 1 which is focusing an image of the object, for instance a military target, on the photo of a light amplifier tube 2. The image is amplified in a known way in the amplifier tube and appears on the screen 3 of the tube. Two mirrors 4 and 5 are located near the screen 3 and are erecting the image vertically. The screen 3 is focussed at infinity by means of a collimating objective 6. Optical prisms 7 and 8 for reversing the image left to right are axially displaced so that they are located on the same side as the tube of the light amplifier 2 with respect to an imaginary plane through the screen 3 and perpendicular to the axis of the tube, i.e. with the orientation of the instrument illustrated in figure 1 the prisms are located below the light amplifier tube 2. By means of the location of the prisms 7 and 8 the light rays are positioned and turned back at the side of the light amplifier tube. Thanks to the location of the prisms 7 and 8 the distance between the optical axes is also on the same time increased so that the collimating objective 6 and the mirrors 4 and 5 can be disposed between the optical axes. The telescope objectives 9 and 10 together with the collimating objective 6 are focusing the object on the image plane of oculars 11 and 12 respectively. The telescope objectives 9, 10 and the oculars 11 and 12 are then so designed that an exit pupil of the microscope of at least 7 millimetres, preferably 7—12 millimetres, is obtained. This means a large relative aperture, a focal ratio of at least 1:3,5, and the objective must be designed as a large aperture anastigmatic lens corrected for a large field of view (compared with a stereo microscope) and a large relative aperture. Consequently the objective must consist of a plurality of individual lenses, some of them may be disposed between the collimating objective 6 and the prisms 7 and 8.

Figure 2 shows another embodiment of the telescope in which the collimating objective 6' is round in contrast to the embodiment illustrated in figure 1, in which the collimating objective 6 is cut, which means that the area of the objective 6' which is otherwise not used can be used for further one or two observation channels, for instance channels for additional observers or for a camera. Otherwise the telescope comprises, like figure 1, a light amplifier tube 2' of which only a part (the back part with the screen) is illustrated in figure 2, mirrors 4' and 5' for erecting the image vertically and prisms 7' and 8' located at the side of the light amplifier tube 2 for erecting the image also in side. Between the prisms 7' and 8' further prisms 13, 14 are located for distributing the light rays to the additional observation channels 15, 16.

## Claims

1. Binocular night telescope comprising a large aperture objective (1), a light amplifier tube (2) and a viewing microscope comprising a common collimating objective (6) for focusing the amplified image at infinity, telescope objectives (9, 10) and oculars (11, 12) and reflecting means (4, 5, 7, 8) for inverting the image to be viewed, characterized in that the optical elements (4, 5, 6, 7, 8, 9, 10) are arranged in the following order with respect to the direction of light: image erecting means (4, 5), collimating objective (6), means for reversing the image left to right (7, 8) — the telescope objectives (9, 10) being arranged before and/or behind the reversing means (7, 8) — so that at least part of the reversing means (7, 8) are located below or above the light amplifier tube (2).

2. Telescope according to claim 1 characterized in that telescope objectives (9, 10) and oculars (11, 12) are so designed that the exit pupil of the microscope has a diameter of at least 7 millimetres.

3. Telescope according to claim 2 characterized in that the exit pupil has a diameter of 7—12 millimetres.

4. Telescope according to claim 1 characterized in that the telescope objectives (9, 10) have a relative aperture of at least 1:3,5.

5. Telescope according to claim 1 characterized by further prisms (13, 14) for distributing the light rays to one or more additional observation channels (15, 16) for, as an example, other operators or to a camera.

**Patentansprüche**

1. Binokulares Nachtfernrohr mit einem Objektiv (1) mit hoher Apertur, einer Lichterverstärkerröhre (2) und einem Sichtmikroskop mit einem gemeinsamen Kollimatorobjektiv (6) zum fokusieren des verstärkten Bildes ins Unendliche, Teleskopobjektiven (9, 10) und Okularen (11, 12) und einer Reflektionseinrichtung (4, 5, 7, 8) zum Invertieren des zu betrachtenden Bildes, dadurch gekennzeichnet, daß die optischen Elemente (4 bis 10) in der folgenden Reihenfolge bezüglich der Lichtrichtung angeordnet sind: Bildaufrichtvorrichtung (4, 5), Kollimatorobjektive (6), Vorrichtung (7, 8) zur Rechts-Links-Umkehr des Bildes — wobei die Teleskopobjektive (9, 10) vor und/oder hinter der Umkehrvorrichtung (7, 8) angeordnet sind, — so daß mindestens ein Teil der Umkehrvorrichtung (7, 8) unterhalb oder oberhalb der Lichtverstärkerröhre (2) angeordnet sind.

2. Binokulares Nachtfernrohr nach Anspruch 1, dadurch gekennzeichnet, daß die Teleskopobjektive (9, 10) und Okulare (11, 12) so ausgestaltet sind, daß die Ausgangspupille des Mikroskops einen Durchmesser von mindestens 7 mm hat.

3. Binokulares Nachtfernrohr nach Anspruch 2, dadurch gekennzeichnet, daß die Ausgangspupille einen Durchmesser von 7 mm bis 12 mm hat.

4. Binokulares Nachtfernrohr nach Anspruch 1, dadurch gekennzeichnet, daß die Teleskopobjektive (9, 10) eine relative Apertur von mindestens 1:3,5 haben.

5. Binokulares Nachtfernrohr nach Anspruch 1, gekennzeichnet, durch weitere Prismen (13, 14) zum Verteilen der Lichtstrahlen auf einen oder mehrere zusätzliche Beobachtungskanäle (15, 16) z.B. für andere Betrachter oder eine Kamera.

**Revendications**

1. Lunette binoculaire pour vision de nuit, comprenant un objectif à grande ouverture (1), un tube amplificateur de lumière (2) et un microscope d'observation qui comprend un objectif de collimation commun (6) pour focaliser à l'infini l'image amplifiée, des objectifs de télescope (9, 10) et des oculaires (11, 12), ainsi que des moyens réfléchissants (4, 5, 7, 8) pour inverser l'image à observer, caractérisée en ce que les éléments optiques (4, 5, 6, 7, 8, 9, 10) sont disposés dans l'ordre suivant par rapport à la direction de la lumière: moyens de redressement de l'image (4, 5), objectif de collimation (6), moyens pour inverser l'image de gauche à droite (7, 8) — les objectifs de télescope (9, 10) étant disposés en avant et/ou en arrière des moyens inverseurs (7, 8) — de telle manière que les moyens inverseurs (7, 8) soient situés, au moins en partie, au-dessous ou au-dessus du tube amplificateur de lumière (2).

2. Lunette selon la revendication 1, caractérisée en ce que les objectifs de télescope (9, 10) et les oculaires (11, 12) sont tels que la pupille de sortie du microscope ait un diamètre d'au moins 7 mm.

3. Lunette selon la revendication 2, caractérisée en ce que la pupille de sortie a un diamètre de 7 à 12 mm.

4. Lunette selon la revendication 1, caractérisée en ce que les objectifs de télescope (9, 10) ont une ouverture relative d'au moins 1:3,5.

5. Lunette selon la revendication 1, caractérisée par des prismes supplémentaires (13, 14) pour distribuer les rayons lumineux à un ou plusieurs canaux d'observation supplémentaires (15, 16), par exemple pour d'autres observateurs, ou à un appareil photographique.

0 033 946

Fig.1

Fig. 2